# EUROPEAN PATENT SPECIFICATION

(11) **EP 0 452 913 B1**
(45) Date of publication and mention of the grant of the patent: **02.08.1995**
(21) Application number: 91106167.9
(22) Date of filing: 17.04.1991
(51) Int. Cl.: C04B 28/18, C04B 12/00, C04B 28/00, E01C 3/00, E01F 7/02, C04B 14/26

(54) **Mix for rural and road building and process for the preparation thereof**
Mischung für den Erd- und Strassenbau und Verfahren zu deren Herstellung
Mélange pour la construction de routes ou le terrassement et procédé pour le produire

(30) Priority: 18.04.1990 IT 2006790
(43) Date of publication of application: 23.10.1991
(73) Proprietor: CONTENTO TRADE S.A.S. di CIOFFI ILARIA, 33020 Rigolato frazione Valpicetto (Udine) (IT)
(72) Inventor: Contento, Maria Pia, I-33100 Udine (IT); Cioffi, Flavio, I-33100 Udine (IT)
(74) Representative: Gervasi, Gemma, Dr.

(56) References cited:
- EP-A- 0 262 302
- DE-A- 3 509 940
- DE-B- 1 160 352
- Ente Nazionale Italiano di Unificazione, Catalogo 1992

## Description

The present invention relates to a mix for rural and road building and to a process for preparing the same.

More particularly the present invention relates to an essentially inorganic or mineral mix for rural and road building, based on a mixture of inert and incoherent materials stiffened by a binder comprising an interlacement of acicular crystals of aluminocarbonates produced "in situ" in said mix.

It has been found that by effecting the formation of crystals of such aluminocarbonates in suitable mixtures of inert, incoherent materials which can be found easily in nature, mixes may be obtained which are characterized by excellent mechanical properties and which, therefore, can be used in the field of rural and road building.

Accordingly the present invention provides a mix for use in rural and road building, comprising the following components:
(a) at least one silicate containing alumina and calcium;
(b) at least one carbonatic rock;
(c) a crystallization orientator; and
(d) optionally, a basicity regulator,
characterized in that the silicate containing alumina and calcium is a mixture of inert and incoherent materials which can be found in nature, and that the crystallization orientator is urea.

Preferably the mix comprises
20 to 80% by weight, with respect to (a+b), of the above component (a);
80 to 20% by weight, with respect to (a+b), of at least one carbonatic rock;
0.1 to 15% by weight with respect to the sum of components (a) and (b), of component (c); and
0.1 to 15% by weight, with respect to the sum of components (a) and (b), of component (d).

Suitable examples of modified silicates, i.e., silicates in which the hydrolysis by atmospheric agents has just started, are tectosilicates, phyllosilicates, inosilicates, neosilicates, sorosilicates, clays (illite) and granite.

Suitable examples of carbonatic rocks are limestone, dolomite, marble and calcite.

As the substance capable of orienting (initiating) the salt crystallization for the mix of the present invention, urea is used.

As the formation of aluminocarbonate crystals is effected in a basic medium, it is preferred that the mixture, before the thermal treatment, has a pH of at least 7, preferably of from 9 to 12.

If use is made of a basicity regulator, this regulator can be selected, e.g., from those of natural origin (such as basic metamorphic rocks), those of artificial origin (such as lime), and from those coming from a chemical synthesis (such as soda, ammonia and the like). Said regulator is generally used in amounts which allow to obtain the above pH values.

The components of the mix of the present invention are mixed to give rise to a plastic and moldable mixture.

The water necessary to obtain said mixture is used in amounts which depend on the kind of starting materials employed and on the granulometric distribution thereof. Generally, however, said amount ranges from 5 to 70% by weight, based on the total composition.

The thus obtained mixture is treated thermally at not too high a temperature for times sufficient for removing the excess water and for increasing the initial rate of aluminocarbonate crystallization. The most suitable temperatures are above 30°C and preferably range from about 35 to about 60°C.

Since the crystallization of the aluminosilicates can also take place (although slowly) at temperatures below 30°C, mixes according to the present invention can also be obtained by removing the excess water from the mixture by natural evaporation at room temperature, generally ranging from 5 to 25°C.

The mix of the present invention generally shows an ultimate tensile compression stress at 180 days (measured according to UNI 6132) of 5 to 20 MPa, an ultimate tensile bending stress at 180 days (according to UNI 6133) of from 1 to 4 MPa and a water absorption by dipping (7 days) of less than 50% by weight, most frequently of from 10 to 25% by weight.

The mix of the invention tends to develop considerable mechanical resistance over time and therefore it can be used as layer for road foundations or for preparing building blocks, suitable for use in the builing of anti-desert barriers, anti-wind barriers, etc.

The process for preparing a shaped article comprises the steps of dry mixing the following components:
(a) at least one silicate containing alumina and calcium;
(b) at least one carbonatic rock;
(c) a crystallization orientator; and
(d) optionally, a basicity regulator,
whereby the silicate containing alumina and calcium is a mixture of inert and incoherent materials which can be found in nature, and whereby the crystallization orientator is urea;
(ii) kneading said components with water;
(iii) shaping the mixture into the desired article; and
(iv) drying the shaped article at a temperature from 5°C to 60°C.

Since it is very favourable to mix the above solid components in granular form with a granulometric distribution which serves to reduce the empty space inside the mix to a minimum and which allows to obtain a high degree of compaction, it is preferred to use materials in the form of granules having a diameter below 25 mm, up to 80% by weight of said materials having a granulometry below 0.2 mm.

The following examples serve to further illustrate the present invention without limiting the scope thereof.

### EXAMPLE 1

100 g of dry powder of clay (illite), 400 g of powder of ground granite, 480 g of limestone, 10 g of nitrogen-containing fertilizer containing 40% of urea and 10 g of 50% aqueous sodium hydroxide were mixed with 500 ml of water.

The solid components of the mixture showed a granulometric distribution below 5 mm and, more particularly, 35% by weight of said components had a granulometry below 0.2 mm.

The mixture was then tamped into a cylindrical die having a diameter of 100 mm and a height of 100 mm, whereafter it was treated for 4 hours at 55°C in a dry environment and for 4 hours at 55°C in an environment having a relative humidity above 60%.

Then the die was opened and the material was kept for 60 days at 20°C in an environment having a relative humidity above 60%.
In a compression test the thus prepared sample showed a compression strength of 1.6 MPa.

### EXAMPLE 2

Example 1 was repeated, except by using 470 g of limestone.

The obtained sample showed a resistance to compression of 2.3 MPa.

### EXAMPLE 3

Example 1 was repeated, except by using 20 g of calcium hydroxide instead of the sodium hydroxide.

The obtained sample showed a resistance to compression of 2.5 MPa.

### EXAMPLE 4

Example 1 was repeated, except by using 460 g of ground limestone.

The obtained sample showed a resistance to compression of 2.8 MPa.

## Claims

1. A mix for use in rural and road building, comprising the following components:
(a) at least one silicate containing alumina and calcium;
(b) at least one carbonatic rock;
(c) a crystallization orientator; and
(d) optionally, a basicity regulator,
characterized in that the silicate containing alumina and calcium is a mixture of inert and incoherent materials which can be found in nature, and that the crystallization orientator is urea.

2. Mix according to claim 1, comprising
20 to 80% by weight, with respect to (a+b), of the above component (a);
80 to 20% by weight, with respect to (a+b), of at least one carbonatic rock;
0.1 to 15% by weight with respect to the sum of components (a) and (b), of component (c); and
0.1 to 15% by weight, with respect to the sum of components (a) and (b), of component (d).

3. The mix according to claim 1, wherein the modified silicate is selected from the group consisting of tectosilicates, phyllosilicates, inosilicates, neosilicates, sorosilicates, clays and granite.

4. The mix according to claim 1, wherein the carbonatic rock is selected from the group consisting of limestone, dolomite, marble and calcite.

5. The mix according to any one of the preceding claims, wherein the basicity regulator is selected from the group consisting of basic metamorphic rocks, lime, soda and ammonia.

6. The mix according to any one of the preceding claims, having a pH of at least 7.

7. The mix according to claim 1, wherein the pH is from 9 to 12.

8. The mix according to claim 1, wherein the solid components a), b) c) and d) are employed in granular form with a granulometric distribution below 25 mm, up to 80% by weight of said components having a granulometry below 0.2 mm.

9. A process for preparing a shaped article comprising:
(i) dry mixing the following components:
(a) at least one silicate containing alumina and calcium;
(b) at least one carbonatic rock;
(c) a crystallization orientator; and
(d) optionally, a basicity regulator,
whereby the silicate containing alumina and calcium is a mixture of inert and incoherent materials which can be found in nature, and whereby the crystallization orientator is urea;
(ii) kneading said components with water;
(iii) shaping the mixture into the desired article; and
(iv) drying the shaped article at a temperature from 5° to 60°C.

10. The process as claimed in claim 9, wherein the components a), b) c) and d) are in the following amounts:
20 to 80% by weight of the above component (a);
80 to 20% by weight of at least one carbonatic rock;
0.1 to 15% by weight with respect to the sum of components (a) and (b), of component (c); and
0.1 to 15% by weight, with respect to the sum of components (a) and (b), of component (d).

11. The process as claimed in claim 9, wherein the temperature is over 30°C.

12. The process as claimed in claim 1, wherein the temperature is from 35° to 60°C.

13. The process according to claim 7, wherein the solid components are employed in granular form with a granulometric distribution below 25 mm, up to 80% by weight of said components having a granulometry below 0.2 mm.

14. The process according to claim 7, wherein the shaped article exhibits tensile compression stress at 180 days from 5 to 20 MPa (measured according to UNI 6132 rule), tensile bending stress at 180 days from 1 to 4 MPa (measured according to UNI 6133 rule) and water absorption by dipping (7 days) lower than 50%.

15. A shaped article for rural and road building, obtainable by means of a process comprising the following steps:
(i) dry mixing the following solid components:
(a) at least one silicate containing alumina and calcium;
(b) at least one carbonatic rock;
(c) a crystallization orientator; and
(d) optionally, a basicity regulator,
characterized in that the silicate containing alumina and calcium is a mixture of inert and incoherent materials which can be found in nature, and that the crystallization orientator is urea; components of the mix claimed in claim 1,
(ii) kneading said components with water;
(iii) shaping the mixture into the desired article; and
(iv) drying the shaped article at a temperature from 5° to 60°C.

16. The shaped article as claimed in claim 15, wherein the components a), b) c) and d) are in the following amounts:
20 to 80% by weight of the above component (a);
80 to 20% by weight of at least one carbonatic rock;
0.1 to 15% by weight with respect to the sum of components (a) and (b), of component (c); and
0.1 to 15% by weight, with respect to the sum of components (a) and (b), of component (d).

17. The shaped article according to claim 15, wherein the said components are employed in granular form with a granulometric distribution below 25 mm, up to 80% by weight of said components having a granulometry below 0.2 mm.

18. A shaped article according to claim 15, exhibiting tensile compression stress at 180 days from 5 to 20 MPa (measured according to UNI 6132 rule), tensile bending stress at 180 days from 1 to 4 MPa (measured according to UNI 6133 rule) and water absorption by dipping (7 days) lower than 50%.

19. Use of the mix according to anyone of claims from 1 to 8, in the preparation of layer for road foundations and building blocks.

## Patentansprüche

1. Mischung zur Verwendung im Erd- bzw. Land- und Straßenbau, umfassend die folgenden Komponenten:
(a) mindestens ein Silikat, enthaltend Aluminium und Calcium,
(b) mindestens einen karbonatischen Stein,
(c) ein Kristallisationsorientierungsmittel und
(d) gegebenenfalls ein Basizitätssteuerungsmittel,
dadurch **gekennzeichnet**, daß
das Aluminium und Calcium enthaltende Silikat eine Mischung inerter und loser, in der Natur auffindbarer Materialien und das Kristallisationsorientierungsmittel Harnstoff sind.

2. Mischung gemäß Anspruch 1, enthaltend
20 bis 80 Gew.%, bezogen auf (a) und (b), der obigen Komponente (a),
80 bis 20 Gew.%, bezogen auf (a) und (b), mindestens eines karbonatischen Gesteins,
0,1 bis 15 Gew.%, bezogen auf die Summe der Komponenten (a) und (b), der Komponente (c) und
0,1 bis 15 Gew.%, bezogen auf die summe der Komponenten (a) und (b), der Komponente (d).

3. Mischung gemäß Anspruch 1,
worin das modifizierte Silikat aus der Gruppe ausgewählt ist, bestehend aus Tektosilikaten, Phyllosilikaten, Inosilikaten, Neosilikaten, Sorosilikaten, Tonen und Granit.

4. Mischung gemäß Anspruch 1,
worin das carbonatische Gestein aus der Gruppe ausgewählt ist, bestehend aus Kalkstein, Dolomit, Marmor und Calcit.

5. Mischung gemäß jedem der vorhergehenden Ansprüche, worin das Steuerungsmittel für die Basizität aus der Gruppe ausgewählt ist, bestehend aus basischen metamorphen Steinen, Kalk, Soda und Ammoniak.

6. Mischung gemäß jedem der vorhergehenden Ansprüche, welche einen pH von mindestens 7 aufweist.

7. Mischung gemäß Anspruch 1, worin der pH 9 bis 12 beträgt.

8. Mischung gemäß Anspruch 1, worin die Feststoffkomponenten (a), (b), (c) und (d) in granularer Form mit einer Korngrößenverteilung unterhalb 25 mm eingesetzt sind, wobei bis zu 80 Gew.% der genannten Komponenten eine Korngröße von weniger als 0,2 mm aufweisen.

9. Verfahren zur Herstellung eines Formgegenstands, wobei man:
(i) die folgenden Komponenten trocken vermischt:
(a) mindestens ein Aluminium und Calcium enthaltendes Silikat,
(b) mindestens ein karbonatisches Gestein,
(c) ein Orientierungsmittel für die Kristallisation und
(d) gegebenenfalls ein Steuerungsmittel für die Basizität,
wobei das Aluminium und Calcium enthaltende Silikat eine Mischung inerter und loser, in der Natur auffindbarer Materialien und das Orientierungsmittel für die Kristallisation Harnstoff sind,
(ii) man die genannten Komponenten mit Wasser verknetet,
(iii) die Mischung zum gewünschten Gegenstand formt und
(iv) den Formgegenstand bei einer Temperatur von 5 bis 60°C trocknet.

10. Verfahren gemäß Anspruch 9, worin die Komponenten (a), (b), (c) und (d) in den folgenden Mengen vorliegen:
20 bis 80 Gew.% der obigen Komponente (a),
80 bis 20 Gew.% mindestens eines karbonatischen Gesteins,
0,1 bis 15 Gew.%, bezogen auf die Summe der Komponenten (a) und (b), der Komponente (c) und
0,1 bis 15 Gew.%, bezogen auf die Summe der Komponenten (a) und (b), der Komponente (d).

11. Verfahren gemäß Anspruch 9, worin die Temperatur oberhalb 30°C liegt.

12. Verfahren gemäß Anspruch 9, worin die Temperatur 35 bis 60°C beträgt.

13. Verfahren gemäß Anspruch 9, worin die Feststoffkomponenten in granularer Form mit einer Korngrößenverteilung unterhalb 25 mm eingesetzt werden, wobei bis zu 80 Gew.% der genannten Komponenten eine Korngröße von weniger als 0,2 mm aufweisen.

14. Verfahren gemäß Anspruch 9, wobei der Formgegenstand eine Zugdruckspannung an 180 Tagen von 5 bis 20 MPa (gemessen gemäß UNI 6132 Regel), eine Zugbiegespannung an 180 Tagen von 1 bis 4 MPa (gemessen gemäß UNI 6133 Regel) sowie eine Wasserabsorption bei Eintauchen (7 Tage lang) von weniger als 50% aufweist.

15. Formgegenstand für den Erd- bzw. Land- und Straßenbau, erhältlich durch ein Verfahren, wobei man:
(i) die folgenden Komponenten trocken vermischt:
(a) mindestens ein Aluminium und Calcium enthaltendes Silikat,
(b) mindestens ein karbonatisches Gestein,
(c) ein Orientierungsmittel für die Kristallisation und
(d) gegebenenfalls ein Steuerungsmittel für die Basizität,
wobei das Aluminium und Calcium enthaltende Silikat eine Mischung inerter und loser, in der Natur auffindbarer Materialien und das Orientierungsmittel für die Kristallisation Harnstoff sind,
(ii) man die genannten Komponenten mit Wasser verknetet,
(iii) die Mischung zum gewünschten Gegenstand formt und
(iv) den Formgegenstand bei einer Temperatur von 5 bis 60°C trocknet.

16. Formgegenstand gemäß Anspruch 15,
worin die Komponenten (a), (b), (c) und (d) in den folgenden Mengen vorliegen:
20 bis 80 Gew.% der obigen Komponente (a),
80 bis 20 Gew.% mindestens eines karbonatischen Gesteins,
0,1 bis 15 Gew.%, bezogen auf die Summe der Komponenten (a) und (b), der Komponente (c) und
0,1 bis 15 Gew.%, bezogen auf die Summe der Komponenten (a) und (b), der Komponente (d).

17. Formgegenstand gemäß Anspruch 15, worin die genannten Komponenten in granularer Form mit einer Korngrößenverteilung unterhalb 25 mm eingesetzt sind, wobei bis zu 80 Gew.% der genannten Komponenten eine Korngröße von weniger als 0,2 mm aufweisen.

18. Formgegenstand gemäß Anspruch 15, welcher eine Zugdruckspannung an 180 Tagen von 5 bis 20 MPa (gemessen gemäß UNI 6132 Regel), eine Zugbiegespannung an 180 Tagen von 1 bis 4 MPa (gemessen gemäß UNI 6133 Regel) und eine Wasserabsorption bei Eintauchen (7 Tage lang) von weniger als 50% aufweist.

19. Verwendung der Mischung gemäß jedem der Ansprüche 1 bis 8 zur Herstellung einer Schicht für Straßenfundamentierungen sowie von Baublöcken.

## Revendications

1. Mélange pour le terrassement et la construction de routes, comprenant les constituants suivants :
a) au moins un silicate contenant de l'alumine et du calcium ;
b) au moins une roche carbonatée ;
c) un orientateur de cristallisation ; et
d) éventuellement un régulateur de basicité,
caractérisé en ce que le silicate contenant l'alumine et le calcium est un mélange de matériaux inertes et incohérents qui peuvent être trouvés dans la nature, et en ce que l'orientateur de cristallisation est l'urée.

2. Mélange selon la revendication 1, contenant :
de 20 à 80 % en poids par rapport à (a+b) du constituant a) ci-dessus ;
de 80 à 20 % en poids par rapport à (a+b) d'au moins une roche carbonatée ;
de 0,1 à 15 % en poids par rapport à la somme des constituants a) et b), du constituant c) ; et
de 0,1 à 15 % en poids par rapport à la somme des constituants a) et b), du constituant d).

3. Mélange selon la revendication 1, dans lequel le silicate modifié est choisi dans le groupe constitué par les tectosilicates, les phyllosilicates, les inosilicates, les néosilicates, les sorosilicates, les argiles et le granit.

4. Mélange selon la revendication 1, dans lequel la roche carbonatée est choisie dans le groupe constitué par le calcaire, la dolomite, le marbre et la calcite.

5. Mélange selon l'une quelconque des revendications précédentes, dans lequel le régulateur de basicité est choisi dans le groupe constitué par les roches métamorphiques basiques, la chaux, la soude et l'ammoniac.

6. Mélange selon l'une quelconque des revendications précédentes, ayant un pH d'au moins 7.

7. Mélange selon la revendication 1, dans lequel le pH est de 9 à 12.

8. Mélange selon la revendication 1, dans lequel les constituants solides a), b), c) et d) sont utilisés sous une forme granulaire avec une distribution granulométrique inférieure à 25 mm, jusqu'à 80 % en poids des dits constituants ayant une granulométrie inférieure à 0,2 mm.

9. Procédé de préparation d'un article façonné, comprenant :
i) le mélangeage à sec des constituants suivants :
a) au moins un silicate contenant de l'alumine et du calcium ;
b) au moins une roche carbonatée ;
c) un orientateur de cristallisation ; et
d) éventuellement un régulateur de basicité,
le silicate contenant l'alumine et le calcium étant un mélange de matériaux inertes et incohérents qui peuvent être trouvés dans la nature, l'orientateur de cristallisation étant l'urée ;
ii) le malaxage des dits constituants avec de l'eau ;
iii)la mise du mélange sous la forme de l'article souhaité ; et
iv) le séchage de l'article façonné à une température de 5° à 60°C.

10. Procédé selon la revendication 9, dans lequel les constituants a), b), c) et d) se trouvent dans les quantités suivantes :
de 20 à 80 % en poids du constituant a) ci-dessus ;
de 80 à 20 % en poids d'au moins une roche carbonatée ;
de 0,1 à 15 % en poids par rapport à la somme des constituants a) et b), du constituant c) ; et
de 0,1 à 15 % en poids par rapport à la somme des constituants a) et b), du constituant d).

11. Procédé selon la revendication 9, dans lequel la température est supérieure à 30°C.

12. Procédé selon la revendication 1, dans lequel la température est entre 35° et 60°C.

13. Procédé selon la revendication 7, dans lequel les constituants solides sont utilisés sous une forme granulaire ayant une distribution granulométrique inférieure à 25 mm, jusqu'à 80 % en poids des dits constituants ayant une granulométrie inférieure à 0,2 mm.

14. Procédé selon la revendication 7, dans lequel l'article façonné présente une tension due aux efforts de compression et de traction à 180 jours de 5 à 20 MPa (mesurée selon la norme UNI 6132), une contrainte de flexion à 180 jours de 1 à 4 MPa (mesurée selon la norme UNI 6133) et une absorption d'eau par immersion (7 jours) inférieure à 50 %.

15. Article façonné pour le terrassement et la construction routière, qui peut être obtenu par un procédé comprenant les étapes suivantes :
i) mélangeage à sec des constituants solides suivants :
a) au moins un silicate contenant de l'alumine et du calcium ;
b) au moins une roche carbonatée ;
c) un orientateur de cristallisation ; et
d) éventuellement un régulateur de basicité,
caractérisé en ce que le silicate contenant l'alumine et le calcium est un mélange de matériaux inertes et incohérents qui peuvent être trouvés dans la nature, et que l'orientateur de cristallisation est l'urée ; constituants du mélange revendiqué dans la revendication 1,
ii) malaxage des dits constituants avec de l'eau ;
iii)mise du mélange sous la forme de l'article souhaité ; et
iv) séchage de l'article façonné à une température de 5° à 60°C.

16. Article façonné selon la revendication 15, dans lequel les constituants a), b), c) et d) se trouvent dans les quantités suivantes :
de 20 à 80 % en poids du constituant a) ci-dessus ;
de 80 à 20 % en poids d'au moins une roche carbonatée ;
de 0,1 à 15 % en poids par rapport à la somme des constituants a) et b), du constituant c) ; et
de 0,1 à 15 % en poids par rapport à la somme des constituants a) et b), du constituant d).

17. Article façonné selon la revendication 15, dans lequel les dits constituants sont utilisés sous une forme granulaire ayant une distribution granulométrique inférieure à 25 mm, jusqu'à 80 % en poids des dits constituants ayant une granulométrie inférieure à 0,2 mm.

18. Article façonné selon la revendication 15, qui présente une tension due aux efforts de compression et de traction à 180 jours de 5 à 20 MPa (mesurée selon la norme UNI 6132), une contrainte de flexion à 180 jours de 1 à 4 MPa (mesurée selon la norme UNI 6133) et une absorption d'eau par immersion (7 jours) inférieure à 50 %.

19. Utilisation d'un mélange selon l'une quelconque des revendications 1 à 8, pour la préparation d'une couche pour des fondations de route et des blocs de construction.
